# EUROPEAN PATENT APPLICATION

(11) **EP 4 438 225 A2**
(43) Date of publication of application: **02.10.2024**
(21) Application number: 24163660.4
(22) Date of filing: 14.03.2024
(51) Int. Cl.: B23Q 1/48, B23Q 1/52, B23Q 5/20

(54) **CABLE DRIVE FOR POSITIONING AN END EFFECTOR FOR WORKING ON A PART**

(30) Priority: 31.03.2023 US 202318194023; 19.04.2023 US 202318303289
(71) Applicant: Airbus Operations GmbH, 21129 Hamburg (DE)
(72) Inventor: FADLOVICH, Chace, Mukilteo, WA 98275 (US); DAVIS, Eric, Mukilteo, WA 98275 (US)
(74) Representative: Isarpatent

(57) **Abstract**

An apparatus for performing operations on a part, and in particular on the fuselage of an aircraft. The apparatus utilizes a spool with a cable wound therearound to move end effectors. The ends of the cable are fixed to an arched beam. Thus, rotation of the spool either moves the beam or moves the spool. The apparatus moves along rails that may be mounted to a fixed structure like floors or walls.

## Description

### FIELD OF THE INVENTION

This invention relates generally to processes and devices for working on parts, and more particularly to processes and devices that position end effectors relative to the part to perform the operations.

### BACKGROUND OF THE INVENTION

In order to carry out certain operations with an end effector, like drilling and riveting, on an aircraft fuselage, the end effector must be positioned in a desired location. These operations could be carried out by an operator or individual. However, in order to carry out these drilling operations or other simple machining operations on assemblies with large sizes, rapidly and with precision, devices have nevertheless been developed in order to at least partially automate these operations.

For example, a device is known which uses two parallel flexible rails which are secured on the structure to be machined. The rails are secured on the structure by suction. An end effector, for example a drill, is moved along the two rails. While presumably effective for its intended purpose, a device of this type is complicated and time consuming to implement. In addition, in terms of construction, the width between the two rails and the surface which can be reached by the machining tool are limited.

Therefore, it would be desirable to provide an apparatus which allows for the desired operations to be performed, which does not suffer from one or more of these drawbacks.

### SUMMARY

A new apparatus for performing operations on a part, and in particular on the fuselage of an aircraft has been invented. The device utilizes a cable wound around a spool to move end effectors. The ends of the cable are fixed to an arch beam. The arch beam may be fixed and allowing the spool to move itself circumferentially. Alternatively, the spool may be fixed, and the arch may be moved circumferentially. Compared with other movement systems, the cable movement system is smaller, weighs less, and easier to customize and allow for more precise movements. Additionally, it provides for an apparatus that does not require tracks mounted on the part.

Therefore, the present invention may be characterized, in at least one aspect, as providing an apparatus for performing operations on a part. The apparatus may include a rail extending parallel to a first axis of the part, a platform and an arch both moveable in a direction parallel with the first axis, wherein one of the platform or the arch is mounted on the rail, a spool and a cable, the cable having a first end secured proximate a first end of the arch and a second end secured proximate a second end of the arch, and an end effector associated with the arch. In the apparatus, rotation of the spool moves the end effector circumferentially around the first axis.

The platform may be mounted to the rail. The spool may be mounted on the platform. The arch may be configured to be rotated circumferentially around the first axis. The end effector may be fixed to a first side, relative to the spool, of the arch. The end effector may be mounted so as to be movable in a radial direction. A second end effector may be attached to a second side of the arch. The first end effector may be configured to perform a first operation, and the second end effector may be configured to perform a second operation different from the first operation, or the same as the first operation. A brake may be provided to apply pressure to the arch to stop circumferential movement or to hold a circumferential position.

In another aspect the present invention may be generally characterized as providing an apparatus for performing operations on a part having: a rail extending parallel to a first axis of the part; a platform and an arch both moveable in a direction parallel with the first axis, wherein the platform is mounted on the rail; a spool and a cable, the cable having a first end secured proximate a first end of the arch and a second end secured proximate a second end of the arch; and, an end effector associated with the first end of the arch; wherein rotation of the spool moves the end effector circumferentially around the first axis.

The end effector may be mounted so as to be movable in a radial direction.

The apparatus may include a second end effector associated with the second end of the arch. The second end effector may be mounted so as to be movable in a radial direction. The first end effector may be configured to perform a first operation, and the second end effector may be configured to perform a second operation different from the first operation.

In another aspect, the present invention may be generally characterized as providing a process for performing an operation on a part by: moving an arch along an axis of the part; and moving an end effector circumferentially around the axis by rotating a spool with a cable partially wound around the spool, the end effector configured to perform the operation.

A first end of the cable may be fixed proximate the first end of the arch and a second end of the cable may be fixed proximate the second end of the arch. The arch may or may not move circumferentially around the axis when the spool is rotated.

The process may also include moving the end effector in a radial direction.

The process may further include moving the end effector in a radial direction.

Additional aspects, embodiments, and details of the invention, all of which may be combinable in any manner, are set forth in the following detailed description of the invention.

### BRIEF DESCRIPTION OF THE DRAWINGS

One or more exemplary embodiments of the present invention will be described below in conjunction with the following drawing figures, in which:
FIG. 1 is a schematic, partially cut away view of a first embodiment of the present invention;
FIG. 2 is another schematic view of the first embodiment shown in FIG. 1; and,

### DETAILED DESCRIPTION

For performing operations on a part, an apparatus according to the present disclosure for performing operations on a part utilizes a cable wound around a spool to move end effectors. The ends of the cable are fixed to an arch beam. The arch beam may be fixed and allowing the spool to move itself circumferentially or the spool may be fixed, and the arch may be moved circumferentially. Compared with other movement systems, the cable movement system is smaller, weighs less, and easier to customize and allow for more precise movements. Additionally, it provides for an apparatus that does not require tracks mounted on the part.

With these general principles in mind, one or more embodiments of the present invention will be described with the understanding that the following description is not intended to be limiting.

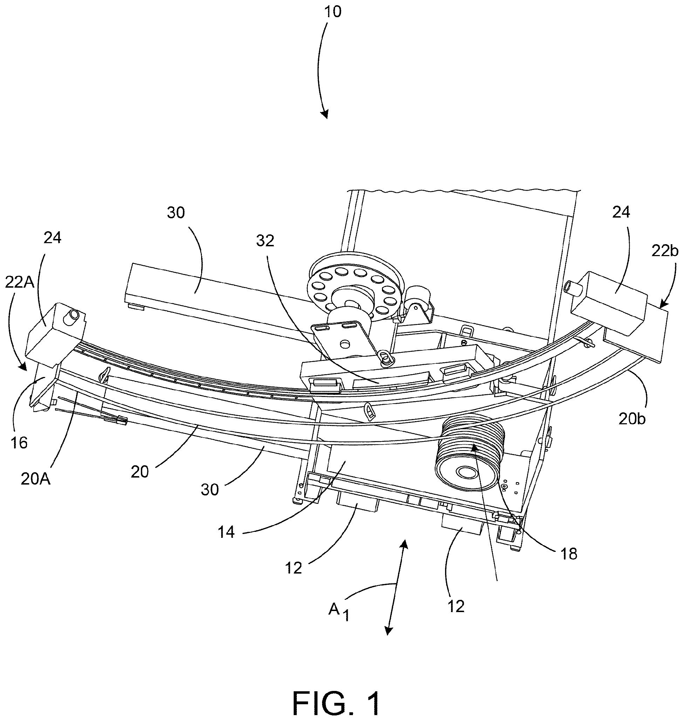

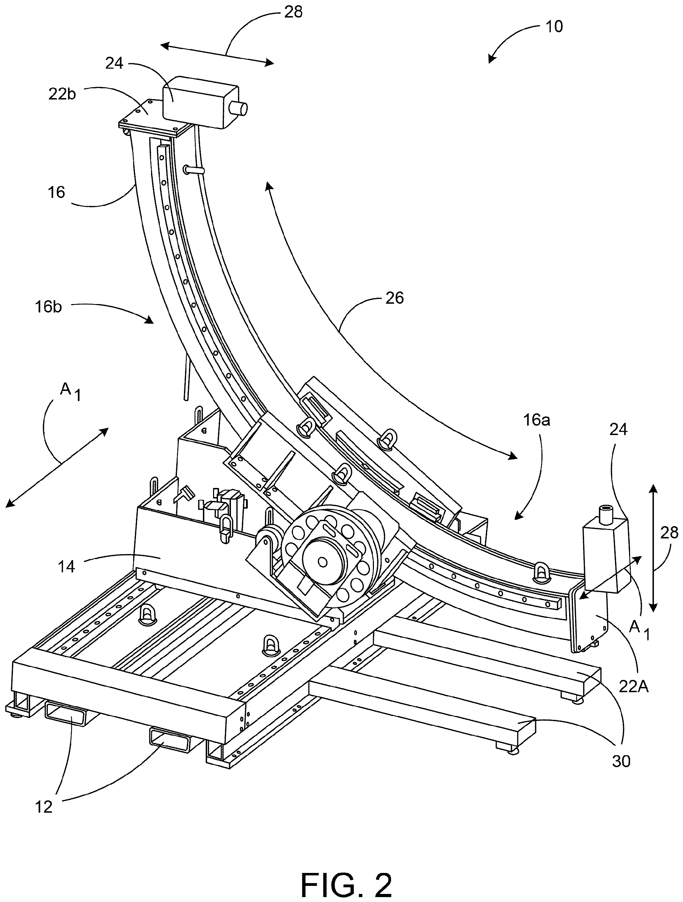

In FIGS. 1 and 2, an apparatus 10 for performing operations on a part, such as an aircraft fuselage, includes at least one rail 12 extending parallel to a first axis A1 of the part. As depicted in FIGS. 1 and 2, two rails 12 are provided. These rails 12 may be mounted to a wall or floor or other fixed structures - in contrast to being fixed to the part as is known in the art.

A platform 14 and arched beam, or simply arch, 16 are provided and configured to move on the rails 12 in a direction generally (i.e., within +/- 30 degrees) along the first axis A1. One of the platform 14 or the arched beam 16 are mounted on the rails 12. A spool 18 is provided on the platform 14, and a cable 20 is wound around the spool 18.

A first end 20a of the cable 20 is fixed to a first side 16a of the arch 16 and a second end 20b of the cable 20 is fixed to a second side 16b of the arch 16. In FIG. 1, only ends 22a, 22b of the arch 16 are shown. The spool 18 is located between the two sides 16a, 16b of the arch 16.

Rotation of the spool 18 (by a motor for example) will cause the arch 16 to move, or rotate, circumferentially (indicated by arrow 26 in FIG. 2) around the first axis A1. Preferably, the ends 20a, 20b of the cable 20 are fixed at or near the ends 22a, 22b of the arch 16 so as to provide the maximum amount of movement. This circumferential movement will allow one or more end effectors 24 associated with the arch 16 to obtain a desired circumferential positioning.

In the embodiments of FIGS. 1 and 2, the platform 14 is mounted to the rails 12 and the arch 16 is mounted to the platform 14. The spool 18 is also mounted on the platform 14 and therefore does not move circumferentially around the first axis A1 as a result of rotation.

One or more end effectors 24 may be fixed to one of the ends 22a, 22b of the arch 16, and, preferably, both ends 22a, 22b of the arch 16 are associated with an end effector 24. A first end effector 24 may be configured to perform a first operation, like drilling, and the second end effector 24 may be configured to perform a second operation different from the first operation, like riveting. Alternatively, both end effectors 24 could both perform the same operation. In addition to drilling and riveting, the end effectors 24 could be sprayers, for painting or coating, or distance sensors for measuring.

The end effectors 24 may be moved in a radial direction (indicated by arrows 28 in FIG. 2). For example, the end effectors 24 could be attached to an arm that moves in an out of the radial direction by a motor. Further, additional rails 30 could be provided which are orientated generally perpendicular to the first A1, allowing the platform 14 to move in the radial direction.

A brake 32 may be utilized to apply pressure to the arch to stop circumferential movement or to hold a circumferential position.

Accordingly, movement of the end effectors 24 along the first axis A1 is accomplished with the platform 14 moving on the rails 12 and movement of the end effectors 24 in a circumferential direction 26 is accomplished with rotating the spool 18 and thus the arched beam 16. Further movement in the radial direction 28 may be accomplished by the end effectors 24 or by mounting the end effectors 24 on a movable arm or providing additional rails 30.

The present apparatus provides for precise, repeatable positioning for end effectors configured to perform operations on a part by using a cable drive system. This allows a lightweight, low cost, and easy to customize configuration. Additionally, the device does not need to be mounted to the part, increasing the production rate.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

## Claims

1. Apparatus (10) for performing operations on a part, the apparatus (10) comprising:
a rail (12) extending parallel to a first axis (A1) of the part;
a platform (14) and an arch (16) both moveable in a direction parallel with the first axis (A1), wherein one of the platform (14) or the arch (16) is mounted on the rail (12);
a spool (18) and a cable (20), the cable (20) having a first end (20a) secured proximate a first end (22a) of the arch (16) and a second end (20b) secured proximate a second end (22b) of the arch (16); and,
an end effector (24) associated with the arch (16);
wherein rotation of the spool (18) moves the end effector (24) circumferentially around the first axis (A1).

2. Apparatus (10) according to claim 1, wherein the platform (14) is mounted to the rail (12), wherein the spool (18) is preferably mounted on the platform (14).

3. Apparatus (10) according to claim 2, wherein the arch (16) is configured to be rotated circumferentially around the first axis (A1).

4. Apparatus (10) according to claim 3, wherein the end effector (24) is fixed to a first side (16a), relative to the spool (18), of the arch (16), wherein the end effector (24) is preferably mounted so as to be movable in a radial direction.

5. Apparatus (10) according to claim 4, further comprising:
a second end effector (24) attached to a second side (16b) of the arch (16), wherein the end effector (24) is preferably configured to perform a first operation, and wherein the second end effector (24) is preferably configured to perform a second operation different from the first operation.

6. Apparatus (10) according to one of claims 2 to 5, further comprising:
a brake (32) configured to apply pressure to the arch (16) to stop circumferential movement or to hold a circumferential position.

7. Apparatus (10) for performing operations on a part, the apparatus (10) comprising:
a rail (12) extending parallel to a first axis (A1) of the part;
a platform (14) and an arch (16) both moveable in a direction parallel with the first axis (A1), wherein the platform (14) is mounted on the rail (12);
a spool (18) and a cable (20), the cable (20) having a first end (20a) secured proximate a first end (22a) of the arch (16) and a second end (20b) secured proximate a second end (22b) of the arch (16); and,
an end effector (24) associated with the first end (22a) of the arch (16);
wherein rotation of the spool (18) moves the end effector (24) circumferentially around the first axis (A1).

8. Apparatus (10) according to claim 7, wherein the end effector (24) is mounted so as to be movable in a radial direction.

9. Apparatus (10) according to claim 7 or 8, further comprising:
a second end effector (24) associated with the second end (22b) of the arch (16), the second end effector (24) is preferably mounted so as to be movable in a radial direction.

10. Apparatus (10) according to claim 9, wherein the end effector (24) is configured to perform a first operation, and wherein the second end effector (24) is configured to perform a second operation different from the first operation.

11. Process for performing an operation on a part, the process comprising:
moving an arch (16) along an axis (A1) of the part; and,
moving an end effector (24) circumferentially around the axis (A1) by rotating a spool (18) with a cable (20) partially wound around the spool (18), the end effector (24) configured to perform the operation.

12. Process according to claim 11, wherein a first end (20a) of the cable (20) is fixed proximate the first end (22a) of the arch (16) and a second end (20b) of the cable (20) being fixed proximate the second end (22b) of the arch (16).

13. Process according to claim 12, wherein the arch (16) is moved circumferentially around the axis (A1) when the spool (18) is rotated, or wherein the arch (16) does not move circumferentially around the axis (A1) when the spool (18) is rotated.

14. Process according to one of claims 11 to 13 further comprising:
moving the end effector (24) in a radial direction.

15. Process according to one of claims 11 to 14 further comprising:
performing the operation with the end effector (24).
